Europäisches Patentamt

European Patent Office

Office européen des brevets

(19)

(11) **EP 0 965 209 B1**

(12) **EUROPÄISCHE PATENTSCHRIFT**

(45) Veröffentlichungstag und Bekanntmachung des Hinweises auf die Patenterteilung:
**30.08.2006 Patentblatt 2006/35**

(51) Int Cl.:
**H04L 27/26** (2006.01)

(21) Anmeldenummer: 97910320.7

(86) Internationale Anmeldenummer:
**PCT/EP1997/005162**

(22) Anmeldetag: **19.09.1997**

(87) Internationale Veröffentlichungsnummer:
**WO 1998/012880 (26.03.1998 Gazette 1998/13)**

(54) **SYSTEM ZUR DIGITALEN INFORMATIONSÜBERTRAGUNG MIT ZUGEHÖRIGEN VERFAHREN UND EINRICHTUNGEN**

DIGITAL INFORMATION TRANSMISSION SYSTEM, CORRESPONDING PROCESS AND DEVICES

SYSTEME DE TRANSMISSION NUMERIQUE DE DONNEES, PROCEDE ET DISPOSITIFS APPROPRIES

(84) Benannte Vertragsstaaten:
**BE DE ES FR GB IT NL SE**

(30) Priorität: **20.09.1996 DE 19638654**

(43) Veröffentlichungstag der Anmeldung:
**22.12.1999 Patentblatt 1999/51**

(73) Patentinhaber: **iAd Gesellschaft für Informatik, Automatisierung und Datenverarbeitung mbH 90613 Grosshabersdorf (DE)**

(72) Erfinder:
• **HAMPEL, Herrmann**
**D-90613 Grosshabersdorf (DE)**
• **HUBER, Johannes**
**D-91094 Langensendelbach (DE)**
• **LEHMANN, Klaus**
**D-91315 Höchstadt (DE)**
• **WAGNER, Thomas**
**D-91126 Kammerstein (DE)**

(74) Vertreter: **Dreykorn-Lindner, Werner et al Patentanwalt, Steinlachstrasse 2 90571 Schwaig (DE)**

(56) Entgegenhaltungen:
EP-A- 0 734 132          WO-A-91/14316
WO-A-92/20179          DE-A1- 4 310 031

• PORTER: "Error distribution and diversity performance of a frequency-differential PSK HF modem" IEEE TRANSACTIONS ON COMMUNICATION TECHNOLOGY., Bd. 16, Nr. 4, August 1968, NEW YORK, US, Seiten 567-575, XP002054551
• MOOSE: "Differentially coded multi-frequency modulation for digital communications" FIFTH EUROPEAN SIGNAL PROCESSING CONFERENCE, 18. - 21.September 1990, AMSTERDAM, NL, Seiten 1807-1810, XP000365916

EP 0 965 209 B1

**Beschreibung**

Die Erfindung betrifft ein System zur digitalen Informationsübertragung, ein Verfahren und eine Einrichtung zur Erzeugung eines Sendesignals, ein Demodulationsverfahren und eine Empfangseinrichtung für ein empfangenes Sendesignal.

In der Nachrichtentechnik ist allgemein ein Mehrträger-Übertragungsverfahren zur Übertragung von digitalen Daten bekannt, wobei die diskrete Fouriertransformation zur Signalsynthese zur Anwendung kommt. Mehrträger-Übertragungsverfahren sind z.B. in John A.C. Bingham: Multicarrier modulation for data transmission: An idea whose time has come, IEEE Communications Magazine, May 1990, Seiten 5 bis 14, beschrieben.

Ein spezielles Verfahren hierzu ist z.B. das sogenannte OFDM-Verfahren (Orthogonal Frequency Division Multiplexing) - auch DMT-Verfahren (Discrete Multitone) genannt -, das in Weinstein, S.B., Ebert, P.M.: Data transmission by frequency-division multiplexing using the discrete Fourier transform, IEEE Transactions on Communication Technology, vol. COM-19, no. 5, Oct. 1971, Seiten 628 bis 634, beschrieben ist. Eine Behandlung von Impulsinterferenzen aufeinanderfolgender Symbole wird mit dem bereits bekannten Verfahren des Einfügens eines Guard-Intervalls gelöst.

Aus der US 5,345,439 ist eine Signalverarbeitungseinrichtung bekannt, bei der für eine universelle Anwendung verschiedene Modulationsformate in einem Gerät realisiert sind. Aus der US 4,313,197 ist eine Einrichtung zum Multiplexen und Demultiplexen von Signalen, insbesondere Sprachsignalen, bekannt. Dabei kommt eine Fourier-Transformation zur Anwendung. Eine Anwendung des OFDM-Verfahrens bei einer optischen Übertragung ist in Olofsson, L., et al.: "Design of OFDM Systems at High Power Levels", Journal of Optical Communications, 17, 1996, 3, Seiten 95 bis 97, bekannt.

Aus der DE-OS 43 10 031 ist ein Verfahren zur Korrektur der Phasenamplitude eines breitbandigen Empfangssignals bekannt, bei dem nach dem COFDM-Verfahren die verwendeten Einzelträgerfrequenzen phasenmoduliert sind. Es erfolgt bei diesem Verfahren ein Synchronisation der Datenblöcke untereinander in Zeitrichtung.

Grundlagen zu diesen Techniken und Verfahren sind dem Fachbuch "Nachrichtenübertragung" von Dr. Ing. Karl Dirk Kammermeyer, B.G. Teubner, Stuttgart, 1992, insbesondere Seiten 68 bis 70, 372, 378, 379 und 606 bis 613, zu entnehmen.

Als nächstliegender Stand der Technik wird von der WO 91 143 16 A gemäß den Oberbegriffen der Ansprüche 1, 7, 13, bzw. 19 ausgegangen. Im Zusammenhang hiermit ist auch die Veröffentlichung MOOSE: "Differentially coded multi-frequency modulation for digital communications", FITH EUROPEAN SIGNAL PRO-CESSING CONFERENCE, 18.-21.September 1990, Amsterdamm, NL, Seiten 1807-1810, bekannt. In diesen Veröffentlichungen ist eine sogenannte Baud-Synchronisierung vorgesehen, bei der mehreren Blöcken von Codesymbolen ein gemeinsames Synchronisier-Baud vorangestellt ist.

Aus PORTER:"Error distribution and diversity performance of a frequency-differential PSK HF modem", IEEE TRANSACTINS ON COMMUNICATION TECHNOLOGY, Bd 16, Nr.4, August 1996, New York, US, Seiten 567-575, ist für ein HF-Modem eine Fehlerkodierung für das sogenannte PSK- Verfahren bekannt.

Aus der WO 92 20179 ist ein weiteres Verfahren und eine Anordnung zur differentiellen Modulation von Signalen in einem Mehrkanal-Übertragungssystem bekannt.

Der Erfindung liegt die Aufgabe zugrunde, ein System mit zugehörigen Verfahren und Einrichtungen zur digitalen Nachrichtenübertragung für Kanäle mit dispersiven Verzerrungen anzugeben. Dabei soll bei hoher Bandbreiteneffizienz und geringer Fehlerrate eine aufwendige Trägerphasen- und Abtastphasensynchronisation vermieden werden.

Diese Aufgabe wird erfindungsgemäß mit den Merkmalen der Patentansprüche 1, 7, 13, 19 bzw. 23 gelöst. Vorteilhafte Ausgestaltungen sind Gegenstand der Unteransprüche.

Um aufwendige Verfahren zur Trägerphasen- und Abtastphasensynchronisation zu umgehen, erfolgt als wesentlicher Grundgedanke der Erfindung die Zuordnung der binären Codesymbole auf die Subträger durch eine differentielle Codierung in Richtung der Subträger, also in Frequenzrichtung. Im Gegensatz hierzu erfolgt dies beim Stand der Technik durch differentielle Modulation in Zeitrichtung. Zusammen mit einer Kanalcodierung und gegebenenfalls einer Codesymbolverwürfelung entlang der Subträger kann auf eine Trägerphasensynchronisation gänzlich verzichtet werden. Die dabei zulässigen Toleranzen bei der Abtastphasensynchronisation sind besonders hoch.

Für eine Block- oder Rahmensynchronisation ist eine Verfahrensweise vorgesehen, die mit einer Präambel arbeitet, um den Blockanfang und damit die Abtastphase zu erkennen. Hierzu eignet sich z.B. eine Barker-ähnliche Autokorrelationsfunktion. Dies ist vorteilhaft bei einer Anwendung mit diskontinuierlichem Betrieb, insbesondere in einem kabelgebundenen Netz, wie es beispielsweise das Stromverteilnetz ist, oder in einem Funknetz.

Das mit der Erfindung realisierte Nachrichten- oder Informationsübertragungsverfahren ist für zeitvariante sowie zeitinvariante Kanäle mit Intersymbolinterferenzen (Reflexionen), also mit dispersiven Verzerrungen, geeignet. Dabei wird das zur Verfügung stehende Frequenzband in M Teilkanäle unterteilt, wobei alle Teilkanäle unabhängig voneinander sind und ein nahezu nichtfrequenzselektives Verhalten aufweisen. Das nichtfrequenzselektive Verhalten resultiert aus der Tatsache, daß die Bandbreite eines Teilkanals so gering ist, daß die Kanalübertragungsfunktion innerhalb eines Teilkanals nahezu konstant ist. Die Erfindung eignet sich beispielsweise zur Anwendung bei der Datenfernübertragung für Zähler oder in der drahtlosen Nachrichten- oder Telefontechnik. Nachfolgend werden im einzelnen die Lösungen der Aufgabe und vorteilhafte Ausgestaltungen näher erläutert.

Ein Verfahren zur Erzeugung eines Sendesignals für die digitale Nachrichtenübertragung sieht vor, daß Subträger mit kanalcodierten parallelen Codesymbolen eines Eingangssignals mittels differentieller Codierung in Frequenzrichtung moduliert werden. Mit Vorteil können die Codesymbole vor der differentiellen Codierung einem Signalraum nach dem PSK- oder QAM-Verfahren zugeordnet werden, was auch als Mapping bezeichnet wird. Die Codesymbole können dabei vor der differentiellen Codierung fehlercodiert und/oder verschachtelt werden. Auf diese Weise ist eine hohe Hammingdistanz und eine geringe Fehlerrate oder Fehlerwahrscheinlichkeit erzielbar.

Es ist günstig, wenn jeder Block (auch als Zeitbereichsfolge beschreibbar) der Codesymbole nach der differentiellen Codierung um eine Sendepause und gegebenenfalls um eine periodische Fortsetzung im Sinne einer Präambel, insbesondere am Blockanfang, ergänzt wird. Auf diese Weise ist eine Demodulation und Blocksynchronisierung im Empfänger vereinfacht. Mit der Sendepause ist eine Störung eines DMT-Blocks durch den Einfluß eines benachbarten vermieden, wodurch die Demodulation im Empfänger vereinfacht ist.

Zur direkten einfachen Erzeugung des Sendesignals kann nach der differentiellen Codierung mittels einer Parallel/Seriell-Umsetzung ein serielles Ausgangssignal erzeugt werden, das nachfolgend mit Vorteil einer Digital/Analog-Umsetzung unterzogen wird, wodurch eine Überführung in ein zeitkontinuierliches Signal möglich ist. Das Ausgangssignal kann dabei serielle Sendeblöcke umfassen, die zeitdiskontinuierlich, insbesondere im Burstbetrieb, gesendet werden. Zur differentiellen Codierung wird bevorzugt eine inverse diskrete Fouriertransformation durchgeführt.

Bezüglich der Einrichtung zur Erzeugung eines Sendesignals für eine digitale Nachrichtenübertragung ist vorgesehen, daß diese ein Modul zur Trägermodulation aufweist, dem kanalcodierte parallele Codesymbole eines Eingangssignals zugeführt sind und in dem die Subträger mit den Codesymbolen mittels differentieller Codierung in Frequenzrichtung belegt werden.

Dem Modul zur Trägermodulation kann mit Vorteil ein Mappingmodul vorgeschaltet sein, in welchem die Codesymbole einem Signalraum nach dem PSK- oder QAM-Verfahren zugeordnet werden. Anders ausgedrückt: Den Codesymbolen wird eine Folge von Amplitudenkoeffizienten einer PSK-Konstellation zugeordnet, welche danach zur Modulation der Subträger mittels differentieller Codierung dienen. Dem Modul zur Trägermodulation kann in vorteilhafter Weise ein Fehlercodierungs- und/oder Verschachtelungsmodul vorgeschaltet sein, wodurch die Fehlerrate bei einer Übertragung reduziert ist.

Dem Modul zur Trägermodulation kann ein Parallel/Seriell-Umsetzer und ein Digital/Analog-Umsetzer nachgeschaltet sein, wobei am Ausgang des Digital/Analog-Umsetzers als Ausgangssignal Sendeblöcke zeitdiskontinuierlich, insbesondere im Burstbetrieb, also nicht im Dauerbetrieb, erzeugt sein können. Das Modul zur Trägermodulation für die differentielle Codierung umfaßt bevorzugt ein Glied für eine inverse diskrete Fouriertransformation. Damit ist eine schnelle, präzise Codierung möglich.

Die erfindungsgemäßen Lösungen für das empfängerseitige Demodulationsverfahren und für den Demodulator sind sinngemäß zu den obigen senderseitigen Ausgestaltungen ausgeführt, wobei im wesentlichen inverse Funktionen und Verfahrensweisen zur Anwendung kommen. Dabei ist es günstig, wenn vor der Differenzierung des empfangenen Sendesignals (auch Empfangssignal genannt) eine gegebenenfalls im Sendesignal enthaltene Sendepause entfernt wird. Zur Block- oder Phasensynchronisation wird mit Vorteil eine im Sendesignal enthaltene Präambel detektiert. Der Blockanfang kann auf einfache Weise durch Korrelationsberechnung, Steigungsberechnung der Korrelationsbetragswerte und Schwellwertentscheidung erkannt werden

Das System zur digitalen Informationsübertragung weist erfindungsgemäß auf:

- eine Einrichtung zur Erzeugung eines Sendesignals mit einem Modul zur Trägermodulation, dem kanalcodierte parallele Codesymbole eines Eingangssignals zugeführt sind und in dem die Subträger mit den Codesymbolen mittels differentieller Codierung in Frequenzrichtung belegt werden, und
- eine Empfangseinrichtung mit einem Demodulator, in welchem die Phase der komplexen Subträgerkoeffizienten differenziert wird.

Der verwendete Übertragungsweg kann kabel- oder drahtlos, z.B. eine Funkverbindung, sein. Für den Übertragungsweg eignet sich auch ein optisches Trägermedium, insbesondere ein Lichtleiter. Als Übertragungsweg kann auf einfache Weise auch eine stromführende oder stromlose Leitung oder ein entsprechendes Netz dienen. Hierzu eignet sich z.B. eine EIB-busähnliche Verbindung oder ein Stromverteilungsnetz. Ein bevorzugtes Anwendungsgebiet der Erfindung ist die Zählerfernabfrage in einem elektrischen Stromverteilungsnetz.

Wesentlich für die bevorzugte Ausführungsform ist,

- daß durch Anwendung der inversen diskreten Fouriertransformation senderseitig parallele unabhängige Teilkanäle bereitstellt werden,
- daß durch Verwendung einer periodischen Fortsetzung eine Eliminierung von Impulsinterferenzen aufeinanderfolgender Blöcke erfolgt,

- daß eine empfangsseitige diskrete Fouriertransformation eines Blocks und Decodierung aller Teilkanalsignale zur Gewinnung der digitalen Daten dient,

wobei

- die digitalen Daten kanalcodiert werden,
- die Belegung der Subträger in Richtung der Subträger differentiell codiert erfolgt, und

empfängerseitig die Phase der komplexen Subträgerkoeffizienten differenziert wird,
derart, daß die Empfangspunkte im Signalraum zurückgewonnen werden.

Kennzeichnend für die vorliegende Idee ist eine spezielle Trägerzuordnung in Verbindung mit Kanalcodierung und sogenanntem Interleaving, so daß eine Kanalentzerrung mit $\dfrac{1}{H(f)}$ entfallen kann, wobei eine Trägerphasensynchronisation nicht notwendig ist. Weiterhin sind die Anforderungen an eine Abtastphasensynchronisation so gering, daß Toleranzen bis zu einigen 100% nahezu ohne Einfluß bleiben.

Zur Realisierung des Systems mit seinen Einrichtungen kommen bevorzugt Rechner, Prozessoren, und/oder Signalprozessoren mit digitaler Informationsverarbeitung und sonstige geeignete Mittel der digitalen Signalverarbeitung zur Anwendung. Die Verfahren lassen sich dabei zumindest teilweise in Form von Programmen oder auch in einem Asic realisieren.

Ausführungsbeispiele der Erfindung, weitere Vorteile und Details werden nachfolgend anhand der Zeichnung näher erläutert. Es zeigen:

Figur 1    Ein Blockschaltbild eines Informationsübertragungssystems,
Figur 2    ein zeitdiskretes Kanalmodell,
Figur 3    eine Sendesequenz bei Synchronisation mit Präambel,
Figur 4    eine aperiodische AKF der 7er Barker-Folge,
Figur 5    ein Beispiel zur Steigungsberechnung mit linearer Regression bei 10 Stützwerten, und
Figur 6    eine Signalkonstellation bei 4-PSK.

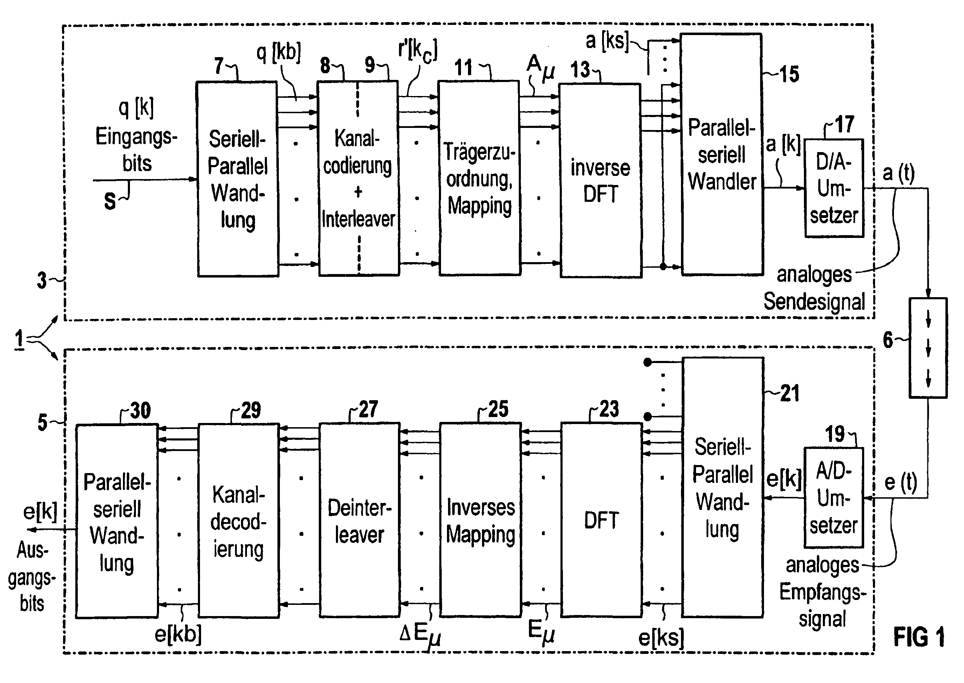

Figur 1 zeigt ein Blockschaltbild eines Systems zur Informations- oder Nachrichtenübertragung 1 (nachfolgend als System 1 bezeichnet), das zunächst grob schematisch erläutert wird. Dabei bezeichnen die Bezugszeichen 3 und 5 die sender- bzw. empfängerseitigen Einrichtungen des Systems 1. Speziell ist mit 3 eine Einrichtung zur Erzeugung eines Sendesignals bezeichnet, die zumindest Teil eines Senders sein kann. Analog hierzu stellt 5 eine Empfangseinrichtung oder zumindest ein Teil hiervon dar. Mit Bezugszeichen 6 ist ein Übertragungsweg bezeichnet.

Dem System 1 wird eingangsseitig eine zur Übertragung vorgesehene Information als Eingangssignal S zugeführt. Vorliegend wird davon ausgegangen, daß es sich dabei beispielhaft um eine digitale Information in Form von seriellen Eingangsbits handelt, die auch als Quellensymbole q[k] bezeichnet werden können. Das serielle Eingangssignal S wird dann zunächst einem Seriell/Parallel -Umsetzer 7 zugeführt, so daß ein paralleles Signal mit Blöcken als Quellensymbole q[kb] erzeugt ist. Liegt das Eingangssignal S in paralleler Form bereits vor, so kann ggf. auf den Seriell/Parallel-Umsetzer 7 verzichtet werden.

Es schließt sich ein Kanalcodierer 8 an, der einen Block von Codesymbolen r[kc] erzeugt, welcher einem Fehlercodierungs- oder Verschachtelungsmodul (nachfolgend Interleaver 9 genannt) zugeführt ist. Der Interleaver 9 erzeugt einen Block umsortierter oder verschachtelter Codesymbole r' [kc], welche einen maximalen Signalabstand im Signalraum aufweisen.

Dem Interleaver 9 ist ein Mappingmodul 11 nachgeschaltet, in welchem die Codesymbole r'[kc] einem Signalraum nach dem PSK- oder QAM-Verfahren zugeordnet werden. Diese Verfahren sind an sich aus dem oben genannten Stand der Technik bekannt. Als Ausgangssignal steht dann ein Block von Signalpunkten Aμ zur Verfügung.

Es schließt sich dann ein Modul zur Trägermodulation 13 an, in welchem jeder Subträger des Mehrträger-Übertragungsverfahrens pulsamplitudenmoduliert (PAM) wird. Dabei kommt eine inverse diskrete Fouriertransformation (IDFT) zur Anwendung. Die dabei entstehenden sogenannten Kanalsymbole a[ks] werden einem Parallel/Seriell-Wandler 15 zugeführt, der eine zeitdiskrete Sendesequenz a [k] erzeugt.

Im oder beim Modul zur Trägermodulation 13 kann ein nicht näher gezeigtes Glied zur Erzeugung einer Sendepause zwischen aufeinanderfolgenden Blöcke vorgesehen sein. Ggf. kann dabei auch jedem Block eine Präambel zugefügt werden. Hierauf wird im weiteren noch speziell eingegangen.

Die Sendesequenz a[k] wird mit einem nachgeschalteten Digital/Analog-Umsetzer 17 in ein analoges Sendesignal a(t) umgewandelt, das dann - gegebenenfalls unter Zwischenschaltung weiterer nicht näher gezeigter technischer Mittel -, z.B. einer Antenne, auf den Übertragungsweg 6 gegeben werden kann.

Da das System 1 für verschiedenste Anwendungen eingesetzt werden kann, sind auch beliebige Übertragungswege denkbar. Der Übertragungsweg 6 kann z.B. kabel- oder drahtlos, insbesondere als Funk- oder Lichtverbindung, ausgeführt sein. Es eignet sich auch ein optisches Übertragungsmedium, insbesondere ein Lichtleiter. Als weitere Alternative kann auch eine stromführende oder stromlose Leitung oder ein entsprechendes Netz dienen. Hierzu eignet sich insbesondere eine EIB-Bus-ähnliche Verbindung oder auch ein Stromverteilungsnetz, das für vielfältige Datenübertragungen, insbesondere für eine Zählerabfrage im Rahmen eines Energiemanagementsystems, genutzt werden kann. Hier kommen die Vorteile bezüglich der fehlerarmen Übertragung besonders zum tragen.

Empfängerseitig wird in inverser Weise zur Senderseite verfahren, um das ursprüngliche Eingangssignal S zurückzugewinnen. Das von der Empfangseinrichtung 5 empfangene Sendesignal a(t), nachfolgend als Empfangssignal e(t) bezeichnet, wird zunächst einem Analog/Digital -Umsetzer 19 zugeführt, dem ein Seriell/Parallel-Wandler 21 nachgeschaltet ist, mit welchem Kanalsymbole e(ks) erzeugt werden.

Diese sind einem nachfolgenden Demodulator 23 zugeführt, der nach einer diskreten Fouriertransformation arbeitet. Hier kann auch die ggf. eingefügte Sendepause (Guardintervall) entfernt werden. Als Ausgangssignal stehen dann die Subträgerkoeffizienten $E_\mu$ an. Es folgen dann sinngemäß zur Senderseite ein Modul 25 für ein inverses Mapping, ein Fehlerdecodierungs- und/ oder Entschachtelungsmodul 27 ( auch Deinterleaver genannt) und ein Kanaldecodierer 29. Soll das zu demodulierende ursprüngliche Signal als serielles Signal ausgegeben werden, so kann sich auch noch ein Parallel/Seriell-Wandler 30 anschließen.

Nachfolgend wird weiter auf Details und spezielle Merkmale des Systems und der darin verwendeten Verfahren in der bevorzugten Ausführungsform näher eingegangen. Gegebenenfalls werden dabei auch von oben abweichende, andere aus der Praxis bekannte Begriffe und Bezeichnungen verwendet, um den allgemeinen Charakter des Systems nicht einzuengen.

Grundlage des Systems ist ein DMT (Diskretes Multitonverfahren) in Verbindung mit DPSK (Difference Phase Shift Keying) Modulation. Die Grundstruktur des Systems 1 gemäß Figur 1 entspricht einem gewöhnlichen OFDM-System. Ausgangspunkt ist dabei die Seriell/Parallel Umsetzung der Quellensymbole q[kb]. Ein Block von Quellensymbolen wird anschließend kanalcodiert. Hierzu eignet sich insbesondere eine Faltungscodierung oder eine Blockcodierung , wie beispielsweise in Proakis, John G.: Digital Communications, McGraw-Hill New York 1995, 3. Auflage beschrieben. Daraus entsteht ein Block von Codesymbolen r[kc], die durch den Interleaver 9 umsortiert oder verschachtelt werden, woraus man r'[kc] erhält. Der Block von Codesymbolen r'[kc] wird danach einem Block von Signalpunkten A= [A1 $A_\mu$ AM] nach einem PSK-Schema im Signalraum zugeordnet (Mapping).

Jetzt wird jeder Subträger mit dem zugehörigen Amplitudenkoeffizient $A_\mu$ PAM-moduliert. Dies erfolgt durch Anwendung der inversen diskreten Fouriertransformation (IDFT). Eine Aufteilung in die M Teilkanäle erfolgt durch inverse diskrete Fouriertransformation (IDFT) gemäß der folgenden Beziehung, bei der die imaginäre Einheit mit j bezeichnet ist.

$$a[k] = IDFT\{A_\mu\} = \frac{1}{M} \cdot \sum_{\mu=1}^{M} A_\mu \cdot e^{+j\frac{2\pi}{M}\cdot(\mu-1)\cdot k}$$

Darin bedeuten: K= Ergebnisindex, M= Transformationslänge, u= Laufindex und A= Amplitude.

Bei dieser Definition der DFT ist wegen der Parsevalschen Gleichung ein Korrekturfaktor 1/M nötig. Diese Signalsynthese erfolgt in effizienter Weise mit Algorithmen der schnellen Fouriertransformation (FFT), wenn M eine Zweierpotenz ist. Die 2M Basisfunktionen des 2M-dimensionalen Signalraums sind durch die Basisfunktionen der diskreten Fouriertransformation gemäß der Beziehung

$$e^{+j\frac{2\pi}{M}\cdot\mu\cdot k} = \cos(\frac{2\cdot\pi}{M}\cdot\mu\cdot k) + j\cdot\sin(\frac{2\cdot\pi}{M}\cdot\mu\cdot k)$$

gegeben, weshalb sie auch orthogonal sind. Jeder komplexe Subträgerkoeffizient $A_\mu$ ist ein Vektor im 2-dimensionalen Signalraum des $\mu$-ten Subträgers.

Die daraus entstehenden Kanalsymbole a[ks] werden um eine periodische Fortsetzung oder Sendepause am Beginn eines jeden Blocks erweitert (das sogenannte Guard-Intervall). Nach einer anschließenden Parallel/Seriell-Umsetzung ergibt sich daraus die zeitdiskrete Sendesequenz a[k]. Ist das Guard-Intervall ausreichend lang gewählt, erfolgt eine impulsinterferenzfreie Übertragung aufeinanderfolgender Blöcke. Zum Guard-Intervall siehe auch Benndorf, Jens u.a.: Angepaßte Signale für Kanäle mit Intersymbolinterferenzen, Archiv der elektrischen Übertragung Vol. 46, 1992, Seiten 409 bis 414 . Das analoge Sendesignal a(t) wird durch einfache D/A-Umsetzung der Sendesequenz a[k] erzeugt.

Nach der Übertragung über den Übertragungskanal 6 steht das empfangene Sendesignal als analoges Empfangssignal e(t) an. Bandpaßsignale werden in der Regel als äquivalente Tiefpaßsignale behandelt. In der Praxis muß das Signal daher tiefpaßgefiltert werden, um die Rauschbandbreite zu begrenzen und vorhandene Aliasing-Komponenten zu unterdrücken. Nach einer A/D-Umsetzung werden die Abtastwerte im Kanalsymboltakt T Seriell/Parallel umgesetzt und das Guard-Intervall entfernt.

Die Amplitudenkoeffizienten der Subträger Ei erhält man unter Anwendung der diskreten Fouriertransformation (DFT). Die DFT realisiert hier die 2M parallelen Korrelatoren, deren Ausgang die Empfangsamplitudenkoeffizienten $E_\mu$ der Subträger sind, entsprechend M Teilkanälen mit 2-dimensionalen Sendesignalen.

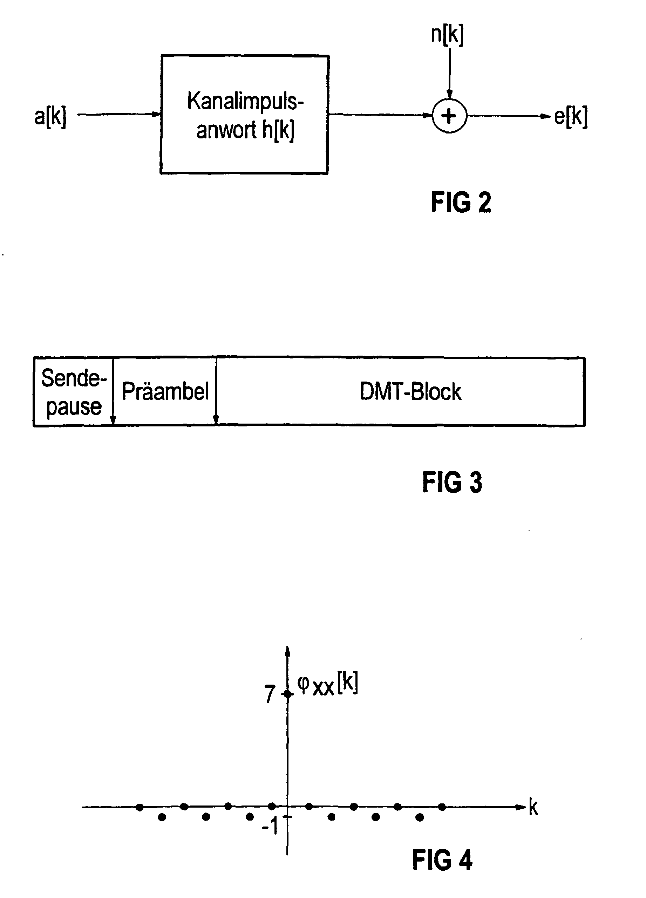

Modelliert man den Kanal durch ein nichtrekursives Filter mit einer Impulsantwort h[k] und fügt weißes gauß'sches Rauschen n[k] additiv hinzu (Figur 2 zeigt hierzu ein zeitdiskretes Kanalmodell), so ergeben sich die Empfangswerte $E_\mu$ der Subträger Ei nach folgender Gleichung (bei ausreichender Länge des Guard-Intervalls):

$$E_\mu = \lambda_\mu \cdot A_\mu + N_\mu$$

mit

$$\lambda_\mu = \sum_{k=0}^{M-1} h[k] \cdot e^{-j\frac{2\pi}{M} k \cdot (\mu-1)} = H\left(f = \frac{2\pi}{M \cdot T} \cdot \mu\right)$$

und

$$N_\mu = \sum_{k=0}^{M-1} n[k] \cdot e^{-j\frac{2\pi}{M} \cdot k \cdot (\mu-1)}$$

Die Übertragung kann also als Gewichtung der Subträgerkoeffizienten $A_\mu$ mit den $l_\mu$ aufgefaßt werden, wie es in Figur 2 dargestellt ist. Die Faltung der diskreten Kanalsymbole a[k] mit der diskreten Kanalimpulsantwort h[k] erscheint bezüglich der Amplitudenkoeffizienten der Subträger wie eine komplexe (zeitinvariante) Gewichtung der Senderträgerwerte mit den Abtastwerten der Kanalübertragungsfunktion.

Die Zuordnung der Subträgerwerte im Signalraum auf binäre Symbole wird beim inversen Mapping durchgeführt. Eine anschließende Decodierung gibt die geschätzten binären Quellensymbole aus. Die Eingangswerte des Decoders können entschiedene Bits sein (auf 1 Bit quantisiert) oder Soft-Decision Werte (auf mehrere Bits quantisiert).

Die bevorzugte Verfahrensweise für das System 1 umfaßt eine spezielle Kombination von Kanalcodierung, Interleaver und spezieller Trägerbelegung. Die Subträgerbelegung bestimmt man nun nach folgendem Verfahren:

Der Block von Codesymbolen r' [kc] wird einem Block von Signalpunkten DA=[DA2 DA$\mu$ DAM0 nach einem PSK-Schema zugeordnet (Mapping), wobei nicht alle Subträger, sondern nur M0 von M verwendet werden (nicht benutzte Subträger werden Null gesetzt).

Beispielsweise 4-PSK mit:

| Eingangsbits | DA$\mu$ |
|---|---|
| 00 | 1 |
| 10 | j |
| 11 | -1 |
| 01 | -j |

Je ein Signalpunkt $DA_\mu$ wird danach einem der M0 benutzten Teilkanäle (Subträger) zugeordnet, wobei ein Teilkanal reserviert ist. Eine Zuordnung auf die Subträger erfolgt nun mit differentieller Codierung entlang der Subträger in Frequenzrichtung, also nicht in Zeitrichtung wie es bei der bekannten DPSK Modulation üblich ist. Die Belegung der Subträger $A=[A1\ A_\mu\ AM]$ ergibt sich aus den $DA_\mu$ nach folgender Gleichung:

$$A_\mu = \begin{cases} \Delta A_\mu \cdot A_{\mu-1} & \mu = 2(1)M_0 \\ 0 & \mu = M_0 + 1(1)M \end{cases}$$

$$mit \quad |A_\mu|, |\Delta A_\mu| := 1$$

wobei Al=Konstant gesetzt ist und somit als Referenz dient.

Die empfangenen Subträgerwerte $E_\mu$ werden differentiell demoduliert, wodurch eine Differentation in Subträgerrichtung gegeben ist. Betrachtet man eine störungsfreie Übertragung, so gilt

$$\Delta E_\mu = E_\mu \cdot E_{\mu-1}^\bullet$$
$$= H_\mu \cdot A_\mu \cdot H_{\mu-1}^\bullet \cdot A_{\mu-1}^\bullet$$
$$= |H_\mu||H_{\mu-1}|e^{+j(\alpha_\mu - \alpha_{\mu-1})} \cdot \Delta A_\mu \quad .$$

Für kleines

$$\Delta f = \frac{2\pi}{T_s} = \frac{2\pi}{M \cdot T}$$

(d.h. M»1) ist die Abschätzung

$$\alpha_\mu - \alpha_{\mu-1} \ll 1$$

gut erfüllt und es gilt in guter Näherung:

$$\approx |H_\mu||H_{\mu-1}| \cdot \Delta A_\mu$$

Dabei bedeutet H* und A* komplex konjugiert zu H bzw. A.

Damit führt die Differentation eine Phasenentzerrung aus. Dies entspricht der relevanten Entzerrung bei PSK-Modulation. Eine Amplitudenentzerrung ist nicht nötig, ist jedoch optional durch eine komplexe Division leicht realisierbar. Der im allgemeinen geringe Fehler in der Phasenentzerrung kann durch eine einfache Kanalcodierung ausgeglichen werden. Wesentlicher Vorteil bei der vorliegenden Verfahrensweise ist, daß eine Phasenentzerrung ausgeführt wird, obwohl keine explizite Entzerrung gemacht wird.

Zudem erlaubt die differentielle Codierung in Frequenzrichtung eine separate Decodierung eines jeden Blocks, was bei Codierung in Zeitrichtung nicht möglich ist. Der Phasenfehler der Amplitudenkoeffizienten hängt damit lediglich vom Störsignal und in nur geringem Maße von den Phasenverzerrungen des Übertragungskanals ab.

Das System 1 verwendet eine Blocksynchronisation. Im allgemeinen müssen bei einem Übertragungssystem Sender und Empfänger miteinander synchronisiert werden. Im vorliegenden Fall genügt eine Abtastphasensynchronisation oder Detektion des Blockanfangs. Ein Abtastphasenfehler bewirkt in der Praxis eine ansteigende d.h. lineare Phasenverzerrung der Subträger. Dies folgt aus dem Verschiebungssatz der diskreten Fouriertransformation

$$DFT\{v[k-\nu]\} = e^{+j\mu\cdot\frac{2\pi\nu}{M}} \cdot DFT\{v[k]\}$$

Die Auswirkungen dieses Phasenfehlers können im wesentlichen durch die Differentation im Empfänger kompensiert werden. Zusammen mit der Kanalcodierung führen Abtastphasenfehler bis $\pm 5T$ (T=Abtasttakt) - das entspricht $\pm 500\%$ bezüglich einem Kanalsymboltakt, bzw. $\pm 2\%$ bezüglich der Blocklänge ohne Guard-Intervall - auf keine nennenswerten Auswirkungen auf die Bitfehlerrate. Die differentielle Codierung in Trägerrichtung erspart also eine Phasenentzerrung, sowie aufwendige Synchronisationsverfahren durch ein sehr einfaches Modulationsverfahren.

Die geringen Anforderungen an die Phasensynchronisation erlauben ein einfaches Synchronisationsverfahren. Dazu wird die Sendesequenz eines Blockes um eine Sendepause und eine Präambel erweitert. Figur 3 zeigt eine derartige Sendesequenz a[k] . Die Detektion der Präambel und damit die Phasensynchronisation erfolgt empfängerseitig in drei Schritten:

- Korrelation im Empfänger,
- evtl. Steigungsberechnung der Betragswerte und
- Schwellwertentscheidung.

Simulationen haben gezeigt, daß damit eine Genauigkeit von $\pm T$ erreicht wird. Die Toleranzen werden also nicht ausgeschöpft. Der Verlust durch Synchronisation ist dabei minimal. Das Verfahren ist einfach in einen digitalen Baustein zu integrieren, da Korrelation und Steigungsberechnung als FIR-Filter (Finite Impulse Response) realisiert werden können. Die Filterkoeffizienten des Korrelationsfilters hkor[k] ergeben sich aus der gesendeten Präambel-Folge hsync[k] als zugehöriges signalangepaßtes Filter (Matched-Filter) gemäß der Beziehung:

$$h_{kor}[k] = h_{sync}^{*}[-k] \quad .$$

Als Präambel-Folgen können beispielsweise Barker-Folgen, Lindner-Folgen oder Lehmann-Folgen (siehe beispielsweise Klaus Lehmann: Entwurf von Filterstrukturen zur Erzeugung mehrstufiger Codes mit Barker-Autokorrelations-Eigenschaften, Archiv für Elektronik und Übertragungstechnik Band 33, 1979 S.190-192) verwendet werden. Wichtig dabei ist die aperiodische Autokorrelationsfunktion der Folge (siehe auch Lüke, Hans Dieter: Korrelationssignale, Springer Berlin 1992). Sie sollte impulsförmigen Charakter haben wie in Figur 4 gezeigt. Figur 4 zeigt eine aperiodische Autokorrelationsfunktion (AKF) der 7er Barker-Folge. Eine Beschränkung auf binäre Präambel-Folgen ist nicht notwendig.

Eine eventuelle Steigungsberechnung bezieht sich hier auf die Steigung einer Geraden, die durch eine begrenzte Anzahl Korrelationswerte Kw gelegt wird, bei der Methoden der linearen Regression zur Anwendung kommen. Die lineare Regression minimiert die Summe der quadratischen Fehler der Geradenpunkte zu den Korrelationswerten. Die Länge des Zeitfensters und damit die Anzahl der Punkte, die durch eine Gerade interpoliert werden, hängt dabei vom Anwendungsfall oder Kanal ab. Eine derartige Steigungsberechnung kann ebenfalls als FIR-Filter realisiert werden.

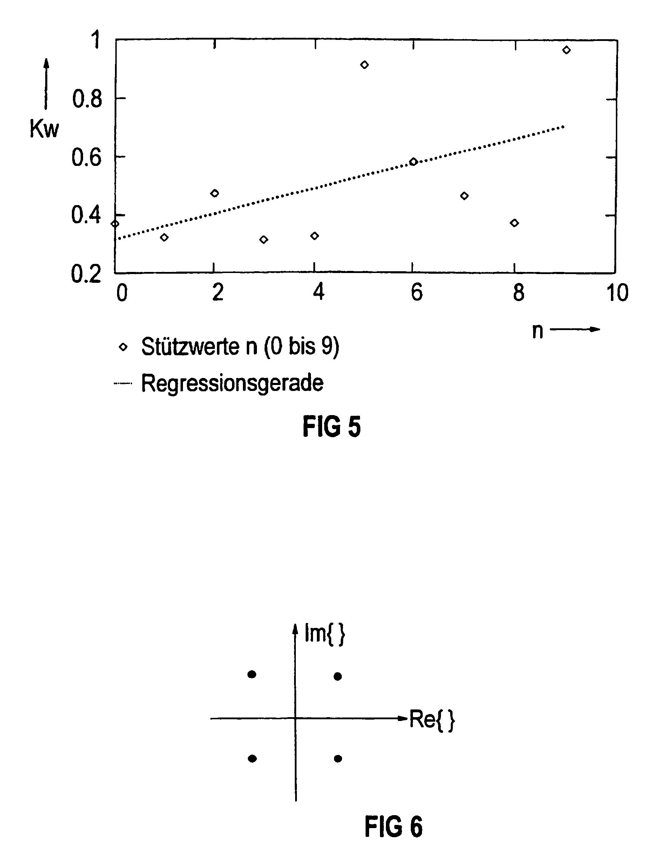

Figur 5 zeigt ein Beispiel einer Steigungsberechnung mit linearer Regression bei 10 Stützwerten (n=0 bis 9). Dabei ist eine Gerade durch 10 Punkte gelegt, um das Vorgehen zu veranschaulichen. Alternativ kann bei geeigneter AKF auch eine direkte Schwellwertentscheidung verwendet werden.

Bei der Trägersynchronisation sind zwei Parameter der Trägerschwingung zu untersuchen, die Auswirkungen eines Trägerphasenfehlers und eines Trägerfrequenzoffsets. Liegt ein Trägerphasenfehler $\Delta\varepsilon$ vor, so bedeutet dies, daß alle Subträger eine Phasendrehung vom Betrag des Phasenfehlers $\Delta\varepsilon$ gemäß den folgenden Beziehungen erfahren.

$$v_{NF}[k] = v_{HF}[k] \cdot e^{-j(2\pi f_T k + \Delta\varepsilon)}$$

$$v_{NF}[k] = v_{HF}[k] \cdot e^{-j2\pi f_T k} \cdot e^{-j\Delta\varepsilon}$$

Nach differentieller Demodulation ist dieser Fehler vollständig eliminiert. Deshalb ist eine Trägerphasensynchronisation nicht erforderlich.

Eine Trägerfrequenzsynchronisation ist dagegen durchaus sinnvoll. Hier haben Simulationen gezeigt, daß ein Frequenzoffset von $10^{-5}$ bezogen auf die Abtastfrequenz (im Basisband, d.h. im Kanalsymboltakt) nahezu ohne Einfluß bleibt. Größere Abweichungen verursachen eine rasche Degradation des Systems. Die Anforderungen an die Frequenzgenauigkeit des Verfahrens sind mit Mitteln nach heutigem Stand der Technik problemlos zu erfüllen.

Mit dem neuen System und seinen Verfahren und Einrichtungen wird bei der digitalen Datenübertragung eine hohe Bandbreiteneffizienz und geringe Bit- oder Messagefehlerwahrscheinlichkeit erzielt, wobei Verfahrensschritte und Zusammenhänge in besonders vorteilhafter Weise miteinander kombiniert und ergänzt sind. Dabei wird eine digitale Datenübertragung mit Codierung und Decodierung zur Verfügung gestellt, bei der im Gegensatz zum Stand der Technik keine Träger- und Taktsynchronisation erforderlich ist. Es verbleibt lediglich eine Blocksynchronisation, die auf einfache Weise gelöst wird.

Die vorteilhafte Modulation in Verbindung mit geeigneter Codierung erreicht beispielsweise eine Bandbreiteneffizienz von über 1 Bit/s/Hz für ein "Vierphasensignal", wie es in Figur 6 (Signalkonstellation bei 4-PSK) dargestellt ist. Je nach geforderter Datenübertragungsrate, Bitfehlerwahrscheinlichkeit und zur Verfügung stehender Übertragungsbandbreite ist das beschriebene Verfahren durch eine einfache Kombination von spezieller Hardware, Mikroprozessoren, digitalen Signalprozessoren oder speziell zu entwickelnden ASIC's flexibel und ohne Probleme realisierbar. Das System wurde bereits durch Simulation mit speziell zusammengestellter Hardware (DSP mit PC-Rechner) erfolgreich erprobt.

## Patentansprüche

1. Verfahren zur digitalen Nachrichtenübertragung, bei dem zur Mehrträgerübertragung senderseitig Subträger mit kanalcodierten parallelen Codesymbolen eines Eingangssignals (S) mittels differentieller Codierung in Frequenzrichtung moduliert werden, indem

   • die Codesymbole vor der differentiellen Codierung fehlercodiert und/oder verschachtelt werden,
   • jedem Block der nach Maßgabe eines diskreten Multitonverfahrens in Verbindung mit einer Modulation erzeugten Codesymbole an seinem Beginn als Synchronisierinformation eine Präambelfolge zur Blocksynchronisierung mit einer impulsförmigen aperiodischen Autokorrelationsfunktion zugeordnet wird,
   • jeder Block der Codesymbole nach der differentiellen Codierung an seinem Beginn um eine periodische Fortsetzung ergänzt wird,
   • nach der differentiellen Codierung mittels einer Parallel/Seriell-Wandlung ein serielles Ausgangssignal (a(t)) erzeugt wird,
   • das serielle Ausgangssignal (a(t)) einer Digital/Analog-Umsetzung unterzogen wird und
   • das Mehrträger- Sendesignal (e(t)), welches Sendeblöcke umfasst, zeitdiskontinuierlich und/oder im Burstbetrieb auf den Übertragungsweg (6) gesendet wird,

   und bei dem empfängerseitig vom empfangenen Mehrträger- Sendesignal (e(t)) die Phase der komplexen Subträgerkoeffizienten differenziert wird und Blöcke der Codesymbole synchronisiert werden, indem

   • vor der Differenzierung das empfangene Sendesignal (e(t)) einer Analog/Digitalumsetzung mit anschließender Seriell/Parallel-Wandlung unterzogen wird,
   • zur Differenzierung eine diskrete Fouriertransformation durchgeführt wird,
   • anschließend eine inverse Signalraumzuordnung mit einer anschließenden Kanaldecodierung und nach der Kanaldecodierung eine Parallel/Seriell-Wandlung durchgeführt wird,
   • nach der Differenzierung eine Fehlerdecodierung oder Entschachtelung erfolgt,
   • die jeweiligen den Blöcken zugeordneten Präambeln jeweils detektiert werden und
   • zur Blocksynchronisation eine Phasensynchronisation anhand einer periodischen Fortsetzung in der Präambel durchgeführt wird.

2. Verfahren nach Anspruch 1, **dadurch gekennzeichnet, dass** als Präambel-Folgen Barker-Folgen oder Lindner-Folgen oder Lehmann-Folgen benutzt werden.

3. Verfahren nach Anspruch 1, **dadurch gekennzeichnet, dass** empfängerseitig die zeitliche Blocksynchronisation durch eine Korrelation unter Berücksichtigung der Betragswerte mittels einer- Schwellwertentscheidung ermittelt wird.

4. Verfahren nach Anspruch 3, **dadurch gekennzeichnet, dass** empfängerseitig die Detektion der Präambel in drei Schritten:

   - Korrelation im Empfänger,
   - Steigungsberechnung der Betragswerte und
   - Schwellwertentscheidung

   erfolgt.

5. Verfahren nach Ansprüche 4, **dadurch gekennzeichnet, dass** zur Steigungsberechnung die Methode der linearen Regression zur Anwendung kommt.

6. Verfahren nach einem der Ansprüche 1 bis 5, **dadurch gekennzeichnet, dass** die Codesymbole vor der differentiellen Codierung einem Signalraum nach dem PSK- oder QAM-Verfahren zugeordnet werden und nach der differentiellen Codierung eine inverse diskrete Fouriertransformation durchgeführt wird.

7. Sendeeinrichtung (1) zur Durchführung des Verfahrens nach Anspruch 1, **dadurch gekennzeichnet, dass** einem Modul zur Trägermodulation (13) ein Kanalcodierer (8), ein Fehlercodierungs- und/oder Verschachtelungsmodul (9) vorgeschaltet ist, dass dem Modul zur Trägermodulation (13) ein Parallel/Seriell-Umsetzer (15) und diesem ein Digital/Analog-Umsetzer (17) nachgeschaltet ist, dass Mittel zur Erzeugung einer Präambelfolge mit einer impulsförmigen aperiodischen Autokorrelationsfunktion zur Blocksynchronisierung für jeden erzeugten Block (DMT-Block, FIG 3) der nach Maßgabe eines diskreten Multitonverfahrens in Verbindung mit einer Modulation erzeugten Codesymbole am Blockanfang vorgesehen sind, und dass im oder beim Modul zur Trägermodulation (13) ein Glied zur Erzeugung einer Sendepause oder einer periodischen Fortsetzung zwischen aufeinanderfolgenden Blöcken vorgesehen ist, wodurch am Ausgang des Digital/Analog-Umsetzers (17) als Ausgangssignal Sendeblöcke zeitdiskontinuierlich und/oder im Burstbetrieb erzeugt sind.

8. Sendeeinrichtung (1) nach Anspruch 6 und 7, **dadurch gekennzeichnet, dass** dem Modul zur Trägermodulation (13) ein Mappingmodul (11) vorgeschaltet ist, in welchem die Codesymbole einem Signalraum nach dem PSK- oder QAM-Verfahren zugeordnet werden und dass das Modul zur Trägennodulation (13) ein Glied für eine inverse diskrete Fouriertransformation umfasst.

9. Empfangseinrichtung (5) zur Durchführung des Verfahrens nach Anspruch 1, **dadurch gekennzeichnet, dass** das empfangene Sendesignal (e(t)) einem Analog/Digitalumsetzer (19) mit nachfolgendem Seriell/Parallel-Wandler (21), welcher einem Demodulator (23) vorgeschaltet ist, zugeführt ist, dass dem Demodulator (23) ein Fehlerdecodierungs- und/oder Entschachtelungsmodul (27) und ein Parallel/Seriell-Wandler (30) nachgeschaltet ist, dass Mittel zur Entfernung einer zwischen Blöcken angeordneten Sendepause oder einer periodischen Fortsetzung vorgesehen sind, und dass Mittel zur Synchronisierung Mittel zur Detektion der den jeweiligen Blöcken der Codesymbole jeweils zugeordneten Präambelfolge mit einer impulsförmigen aperiodischen Autokorrelationsfunktion und zur Synchronisierung mit diesen aufweisen.

10. Empfangseinrichtung (5) nach Anspruch 6 und 9, **dadurch gekennzeichnet, dass** der Demodulator (23) ein Glied für eine diskrete Fouriertransformation umfaßt und dass dem Demodulator (23) ein Modul (25) für ein inverses Mapping zur inversen Signalraumzuordnung und ein nachfolgender Kanaldecodierer (29) nachgeschaltet sind.

11. Nachrichtenübertragungssystem zur digitalen Informationsübertragung mit einem Mehrträgerübertragungsverfahren, mit einer Einrichtung (1) zur Erzeugung eines Sendesignals (a(t)) mit einem Modul zur Trägermodulation (13), dem kanalcodierte parallele Codesymbole eines Eingangssignals (S) zugeführt sind und in dem die Subträger mit den Codesymbolen mittels differentieller Codierung in Frequenzrichtung belegt werden,

   ➢ wobei dem Modul zur Trägermodulation (13) ein Fehlercodierungs- und/oder Verschachtelungsmodul (9) vorgeschaltet und ein Parallel/Seriell-Umsetzer (15) nachgeschaltet sind,
   ➢ wobei Mittel zur Erzeugung einer Präambelfolge mit einer impulsförmigen aperiodischen Autokorrelationsfunktion zur Blocksynchronisierung für jeden erzeugten Block (DMT-Block, FIG 3) der nach Maßgabe eines diskreten Multitonverfahrens in Verbindung mit einer Modulation erzeugten Codesymbole am Blockanfang vorgesehen sind, und
   ➢ wobei im oder beim Modul zur Trägermodulation (13) ein Glied zur Erzeugung einer Sendepause oder einer periodischen Fortsetzung zwischen aufeinanderfolgenden Blöcken vorgesehen ist,

und mit einer Empfangseinrichtung (5) für das empfangene Mehrträger-Sendesignal, in welchem die Blöcke (DMT-Block, FIG 3) zeitdiskontinuierlich aufeinander folgen, mit einem Demodulator (23), in dem die Phase der komplexen Subträgerkoeffizienten differenziert wird,

- wobei das empfangene Sendesignal (e(t)) einem Analog/Digitalumsetzer (19) mit nachfolgendem Seriell/Parallel-Wandler (21), der dem Demodulator (23) vorgeschaltet ist, zugeführt ist,
- wobei dem Demodulator (23) ein Fehlerdecodierungs- und/oder Entschachtelungsmodul (27) nachgeschaltet ist/sind,
- wobei Mittel zur Entfernung der Sendepause oder der periodischen Fortsetzung vorgesehen sind, und
- wobei Mittel zur Detektion der den jeweiligen Blöcken jeweils zugeordneten Präambelfolge mit einer impulsförmigen aperiodischen Autokorrelationsfunktion und zur Synchronisierung der jeweiligen Blöcke vorgesehen sind.

**12.** System nach Anspruch 11, **dadurch gekennzeichnet, dass** der Übertragungsweg (6) eine Funkverbindung ist oder ein optisches Trägermedium hat oder ein Lichtleiter ist oder für den eine stromführende oder stromlose Leitung oder ein entsprechendes Netz oder eine Verbindung gemäss einem EIB (European Installation Bus) oder ein Stromverteilungsnetz dient.

## Claims

**1.** Method for the digital information transmission, wherein, for multicarrier transmission, at the transmitter side subcarriers are modulated with channel coded parallel code symbols of an input signal (S) by means of differential coding in the frequency direction, the inventive method comprises the following steps:

- error coding and interleaving of said code symbols prior to said differential coding,
- assigning each block of said code symbols, generated according to a discrete multitone method combined with a modulation, at its beginning as synchronisation information a preamble for block synchronisation with an aperiodic pulse shaped auto-correlation function,
- adding to each block of said code symbols, after said differential coding, at its beginning a periodic continuation as a guard interval,
- producing a serial output signal (a(k)) by means of parallel/serial conversion, subsequent to said differential coding,
- converting from analogue to digital said serial output signal (a(k)) and
- transmitting to a transmission path (6) said multicarrier transmission signal (a(t)), which comprises transmission blocks, discontinuous in time and/or in a burst mode,

and wherein, at the receiver side, the phase of complex subcarrier coefficients of a received multicarrier transmission signal (e(t)) is differentiated and blocks of code symbols are synchronised, the inventive method comprises the following steps:

- converting from analogue to digital with subsequent serial/parallel conversion said received transmission signal (e(t)) prior to differentiation,
- carrying out a discrete Fourier transformation for differentiation,
- assigning subsequently an inverse signal space, and subsequently performing a step of channel decoding and following the channel decoding by parallel/serial conversion,
- carrying out at least one of error decoding and deinterleaving, subsequent to said differentiation,
- detecting respective preambles assigned to said blocks, and
- synchronising said blocks by performing a phase synchronisation by means of a periodic continuation in the preamble.

**2.** Method according to claim 1, wherein Barker sequences or Lindner sequences or Lehmann sequences are used for said preambles.

**3.** Method according to claim 1, wherein at the receiver side said time block synchronisation is determined with a correlation taking into account the absolute values by means of a threshold detection.

**4.** Method according to claim 3, wherein at the receiver side said detection of said preamble is performed in three steps:

- correlation at the receiver,
- computation of the gradient of the absolute values and
- threshold detection.

**5.** Method according to claim 4, wherein the method of linear regression is used for said computation of the gradient.

**6.** Method according to any of claims 1 to 5, **characterized in that**, prior to differential coding, assigning said code symbols to a signal space according to a method selected from a group of methods consisting of PSK and QAM, and subsequent to said differential coding performing an inverse discrete Fourier transformation.

**7.** Transmitting device (1) for performing the method according to claim 1, **characterized in that** said transmitting device (1) comprises a channel coder (8) and a module for at least one of error coding and interleaving (9) connected upstream of said module for carrier modulation (13) in the signal flow direction, a parallel/serial converter (15) and a subsequent digital/analogue converter (17) connected downstream of said module for carrier modulation (13) in the signal flow direction, means for generating a preamble with an aperiodic autocorrelation function of pulsed character at the beginning of the block for block synchronisation of each block (DMT block, FIG 3) of code symbols, generated according to a discrete multitone method in combination with a modulation, an element for producing a transmission pause or a periodic continuation between successive blocks provided within or next to said module for carrier modulation (13) whereby said digital/analogue converter (17) generating an output signal in transmission blocks discontinuous in time and/or in a burst mode.

**8.** Transmitting device (1) according to claim 6 and 7, which further comprises a mapping module (11) connected upstream of said module for carrier modulation (13) in the signal flow direction, said mapping module (11) assigning the code symbols to a signal space with a method selected from the group of methods consisting of PSK and QAM, and said module for carrier modulation (13) comprising an element for an inverse discrete Fourier transformation.

**9.** Receiving device (5) for performing the method according to claim (1), **characterized in that** said receiving device (5) comprises an analogue/digital converter (19) receiving a transmission signal (e(t)), a serial/parallel converter (21) connected downstream of said analogue/digital converter (19) in a signal flow direction, and upstream of a demodulator (23) in the signal flow direction, a module for at least one of error decoding and deinterleaving (27) and a parallel/serial converter (30) connected downstream of said demodulator (23), means for removing a transmission pause between blocks or a periodic continuation, means for synchronisation comprising means for detecting a preamble with an aperiodic autocorrelation function of pulsed character respectively assigned to the respective blocks of code symbols and for synchronising with these.

**10.** Receiving device (5) according to claims 6 and 9, **characterized in that** said demodulator (23) comprises an element for a discrete Fourier transformation and wherein a module (25) for inverse mapping and for inverse signal space assignment and a subsequent channel decoder (29) are connected downstream of said demodulator (23) in signal flow direction.

**11.** Communication system for digital information transmission with a multicarrier transmission method, comprising a device (1) for producing a transmission signal (a(t)), said device having a module for carrier modulation (13) receiving channel coded parallel code symbols of an input signal (S) and assigning to subcarriers thereof the code symbols by means of differential coding in the frequency direction,

  • wherein a module for at least one of error coding and interleaving (9) is connected upstream of said module for carrier modulation (13) in a signal flow direction and a parallel/serial converter (15) is connected downstream of said module for carrier modulation (13) in a signal flow direction,
  • wherein means are provided for producing synchronisation information for block synchronisation by producing a preamble for each block (DMT block, FIG 3) of code symbols at a start thereof, said code symbols being generated according to a discrete multitone method combined with a modulation, and said preamble having an aperiodic autocorrelation function of pulsed character, and
  • wherein an element for producing a transmission pause or a periodic continuation between successive blocks is provided within or next to said module for carrier modulation (13),

and further comprising a receiving device (5) for the received multicarrier transmission signal in which the blocks (DMT block, FIG 3) follows one another discontinuous in time, which comprises a demodulator (23) for differentiating a phase of complex subcarrier coefficients,

• wherein said received transmission signal (e(t)) is input to an analogue/digital converter (19) with a subsequent serial/parallel converter (21) connected upstream of said demodulator (23) in the signal flow direction,
• wherein a module for at least one of error decoding and deinterleaving (27) is connected downstream of said demodulator (23) in the signal flow direction,
• wherein means are provided for removing a transmission pause or a periodic continuation, and
• wherein means are provided for detecting the preambles respectively assigned to respective blocks, and for synchronising the respective blocks, said preambles having an aperiodic autocorrelation function of pulsed character.

12. The system according to claim 11, **characterized in that** said transmission path (6) is a radio link or an optical transmission path or an optical conductor or is defined through a link selected from the group consisting of a power cable, a non-power cable, and an equivalent network, or a link equivalent to an EIB (European Installation Bus) or a power distribution network.

## Revendications

1. Procédé de transmission d'informations numérique dans lequel du coté émission pour une transmission à porteuse multiple des sous-porteuses sont modulées avec des symboles de code par canal codés et parallèles d'un signal d'entrée (S) à l'aide d'un codage différentiel en fréquence, comprenant les étapes consistant à:

   • les symboles de code sont codés d'erreurs et/ou pour l'entrelacement desdits avant le codage différentiel,
   • chaque bloc des symboles de code créés par un procédé discrète de numérotation par tonalité ensemble avec une modulation est attribué à son début une séquence de préambule comme information de synchronisation pour la synchronisation du bloc avec une fonction d'auto corrélation pulsée apériodique,
   • chaque bloc de symbole de code est ajouté une suite périodique après le codage différentiel,
   • après le codage différentiel un signal de sortie sériel ( a(k) ) est créé par une conversion parallèle/sérielle,
   • le signal de sortie sériel ( a(k) ) sera convertie à l'aide d'un convertisseur numérique/analogique et,
   • le signal d'émission à porteuse multiple ( a(t) ), ayant des blocs d'émission, sera émis en forme discontinue en temps et/ou en giclée de signaux sur la ligne de transmission (6),

   et dans lequel du coté réception la phase du signal d'émission à porteuse multiple (e(t)) du coefficient de sous-porteuse est différentié et des blocs de symboles de code sont synchronisés, comprenant les étapes consistant à:

   • avant la différentiation du signal d'émission reçu ( e(t) ) une conversion analogique/numérique avec une conversion sérielle/parallèle suivante est effectuée,
   • pour la différentiation une transformation de Fourier discrète est effectuée,
   • après une adjonction d'espace de signaux inverse avec un décodage de canaux suivant et après le décodage de canaux une conversion parallèle/sérielle est effectuée,
   • après la différentiation un décodage d'erreurs ou une désentrelacement est effectué,
   • les préambules étant coordonnées aux bloc respectifs sont détectées et,
   • pour la synchronisation de blocs on effectue une synchronisation de phases avec une suite périodique dans la préambule.

2. Procédé selon revendication 1, **caractérisé en ce que** les séquences de préambule sont des séquences de Barker ou des séquence de Lindner ou des séquences de Lehmann.

3. Procédé selon revendication 1, **caractérisé en ce que** du coté réception la synchronisation de blocs en temps est effectuée par une corrélation en tenant compte des modules, étant déterminés par un discriminateur.

4. Procédé selon revendication 3, **caractérisé en ce que** du coté réception la détection de préambule s'effectue en trois pas :

   - corrélation au récepteur,
   - calcul de montée de module,
   - discrimination.

5. Procédé selon revendication 4, **caractérisé en ce que** la méthode de la régression linéaire est appliquée pour le calcul de montée de module.

6. Procédé selon revendications 1 jusqu'à 5, **caractérisé en ce que** les symboles de code avant le codage différentiel sont attribués à un espace de signaux d'après les méthodes PSK ou QAM et après le codage différentiel une transformation de Fourier discrète et inverse est effectuée.

7. Dispositif d'émission pour la réalisation des procédés selon revendication 1, **caractérisé en ce qu'**un codeur de canaux (8), un module de codage d'erreurs et/ou pour l'entrelacement (9) sont monté en série avant le module de modulation de porteuse (13), que le module de modulation de porteuse (13) est suivi par un convertisseur parallèle/sériel (15) et un convertisseur numérique /analogique (17), qu'un moyen pour la création d'une séquence de préambule avec une fonction d'autocorrélation pulsée et apériodique pour la synchronisation de blocs pour chaque bloc créé ( DMT-Bloc, FIG. 3) un symbole de code créé par un procédé discrète de numérotation par tonalité ensemble avec une modulation est prévu au début de bloc et que dans ou près du module de modulation de porteuse (13) un dispositif pour la création d'une pause d'émission ou d'une suite périodique entre les blocs suivants est prévu par lequel à la sortie du convertisseur numérique/analogique (17) des blocs d'émission discontinus en temps et/ou en giclée de signaux comme signal de sortie sont créés.

8. Dispositif d'émission selon revendications 6 et 7, **caractérisé en ce qu'**avant le module pour la modulation de porteuse (13) est monté en série un module de cartographie dans lequel les symboles de code sont attribués à un espace de signaux par la méthode de PSK ou de QAM et que le module pour la modulation de porteuse (13) contient un module pour la transformation de Fourier discrète et inverse.

9. Dispositif de réception pour la réalisation du procédé selon revendication 1, **caractérisé en ce que** le signal d'émission reçu ( e(t) ) est transmis à un convertisseur analogique/numérique (19) étant monté en série avec un convertisseur sériel/parallèle suivant (21) lequel se trouve devant un démodulateur (23), que le démodulateur suit un décodeur d'erreurs et/ou un module pour désentrelacement (27) et un convertisseur parallèle/sériel (30), qu'on a prévu des moyens pour effacer une pause d'émission étant situé entre des blocs ou une suite périodique et que des moyens de synchronisation, de détection des séquences de préambule attribuées aux blocs respectifs de symboles de code avec une fonction d'autocorrélation apériodique pulsée et pour la synchronisation avec ceux-ci.

10. Dispositif de réception (5) selon revendications 6 et 9, **caractérisé en ce que** le démodulateur (23) contient un module pour une transformation de Fourier discrète et qu'un module de cartographie inverse (25) pour l'attribution inverse de l'espace de signaux et un décodeur de canaux suivant (29) sont montés en série après le démodulateur (23).

11. Système de transmission d'information pour la transmission d'information numérique avec un procédé de transmission à porteuse multiple, avec un dispositif (1) pour la création d'un signal d'émission ( a(t) ) avec un module pour la modulation de porteuse (13), lequel est alimenté par des symboles de code canal codés et parallèles d'un signal d'entrée (S) et dans lequel les sous-porteuses sont chargées avec les symboles de code à l'aide d'un codage différentiel en fréquence,

   • dans lequel avant le module pour la modulation de porteuses (13) est connecté un module de codage d'erreurs et/ou un module d'imbrication (9) et après celui-ci un convertisseur parallèle/sériel (15),
   • dans lequel des moyens pour la création d'une séquence de préambules avec une fonction d'autocorrélation pulsé et apériodique pour synchroniser les blocs pour chaque bloc créé ( DTM-Bloc, FIG 3 ) étant prévu au début de bloc avec le symbole de code créé selon un procédé discrète de numérotation par tonalité ensemble avec une modulation et
   • dans lequel dans ou près du module pour la modulation de porteuses (13) un dispositif pour la création d'une pause d'émission ou d'une suite périodique entre les blocs suivants est prévu,

   et avec un dispositif de réception (5) pour le signal émis à porteuse multiple, dans lequel les blocs ( DMT-Bloc, FIG. 3 ) suivent discontinue en temps, comprenant un démodulateur (23), dans lequel la phase du coefficient complexe de sous-porteuse est différentié,

   • dans lequel le signal d'émission reçu ( e(t) ) alimente un convertisseur analogique /numérique (19) suivi par un convertisseur sériel/parallèle (21) étant monté avant le démodulateur (23),
   • dans lequel un module de codage d'erreurs et/ou un module d'imbrication sont/est monté(s) en série au démodulateur (23),

• dans lequel des moyens pour effacer une pause d'émission ou une suite périodique sont prévu et,
• dans lequel des moyens de détection de séquences de préambule attribués aux blocs respectifs avec une fonction d'autocorrélation apériodique et pulsée et pour la synchronisation avec ceux-ci sont prévus.

12. Système selon revendication 11, **caractérisé en ce que** la ligne de transmission (6) est une liaison hertzienne ou une ligne optique ou une ligne à base de fibres optiques ou cette ligne peut être une ligne électrique avec ou sans courant ou un réseau respectif ou une liaison selon EIB (European Installation Bus) ou un réseau électrique de distribution.

FIG 1

**FIG 2**

**FIG 3**

**FIG 4**

**FIG 5**

**FIG 6**